# EUROPÄISCHE PATENTSCHRIFT

(11) **EP 4 052 425 B1**
(45) Veröffentlichungstag und Bekanntmachung des Hinweises auf die Patenterteilung: **06.11.2024**
(21) Anmeldenummer: 20800793.0
(22) Anmeldetag: 13.10.2020
(51) Int. Cl.: H04L 12/40, H04B 3/54, B60R 16/023, H04L 12/403

(54) **VERFAHREN, MODEM UND NETZWERK ZUR KOMMUNIKATION ZWISCHEN GERÄTEN EINES FAHRZEUGS**
METHOD, MODEM AND NETWORK FOR COMMUNICATION BETWEEN DEVICES OF A VEHICLE
PROCÉDÉ, MODEM ET RÉSEAU POUR LA COMMUNICATION ENTRE DES DISPOSITIFS D'UN VÉHICULE

(30) Priorität: 30.10.2019 DE 102019129241
(43) Veröffentlichungstag der Anmeldung: 07.09.2022
(73) Patentinhaber: HELLA GmbH & Co. KGaA, 59557 Lippstadt (DE)
(72) Erfinder: AICHINGER-ROSENBERGER, Michael, 3620 Spitz/Donau (AT); FISCHER, Dominik, 1030 Wien (AT); HOCHWARTER, Daniel, 3434 Tulbing (AT); KELLNER, Karlheinz, 3500 Krems (AT); POSNICEK, Thomas, 3485 Haitzendorf (AT)
(74) Vertreter: Ostermann, Thomas
(86) Internationale Anmeldenummer: PCT/EP2020/078681
(87) Internationale Veröffentlichungsnummer: WO 2021/083658

(56) Entgegenhaltungen:
- EP-A1- 1 289 164
- DE-A1- 10 301 637
- DE-A1- 102006 059 689

## Beschreibung

Die vorliegende Erfindung betrifft ein Modem und ein Netzwerk zur Kommunikation zwischen mindestens zwei Geräten eines Fahrzeugs, wobei die Geräte über eine gemeinsame Stromversorgungsleitung miteinander kommunizieren.

### STAND DER TECHNIK

Zur Kommunikation zwischen Geräten eines Fahrzeugs kommen heutzutage insbesondere Feldbusse wie das Controller Area Network (CAN) und das Local Interconnect Network (LIN) zum Einsatz. Die damit aufgebauten Kommunikationsnetzwerke umfassen typischerweise eine Vielzahl an Geräten, beispielsweise in Kraftfahrzeugen Arbeitsscheinwerfer und Signalleuchten bzw. Segmente davon, Kameras und Bordsensoren sowie zugehörige Steuereinheiten. Die Geräte sind dabei mit separaten Signalleitungen untereinander verbunden und die Bus-Transceiver werden über serielle Schnittstellen angesteuert. Nachteilig an der Verwendung derartiger Bus-Systeme sind Platzbedarf, Komplexität und Montageaufwand für die Einrichtung des Netzes an Signalleitungen, welches parallel zu dem Stromversorgungsnetz aufzubauen ist. insbesondere im Zuge der fortschreitenden Autonomisierung von Kraftfahrzeugen nimmt die Anzahl der in das Bordnetzwerk einzubindenden Kameras, Sensoren und Einrichtungen zur Nahbereichskommunikation mit anderen Verkehrsteilnehmern stetig zu, so dass die mit der Verkabelung sämtlicher Geräte einhergehenden Nachteile zunehmend hervortreten.

Im Stand der Technik werden daher Ansätze verfolgt, auf ein separates Netz an Signalleitungen zu verzichten und stattdessen gemeinsame Stromversorgungsleitungen für die Kommunikation mittels hochfrequenter Datensignale zwischen den Geräten zu nutzen (sog. Powerline Communication). Dabei besteht die Herausforderung darin, trotz der auf den Versorgungsleitungen auf tretenden Reflexionen, Stör- und Rauschsignalen eine ausreichend schnelle und robuste Kommunikation zwischen den Bordgeräten zu gewährleisten.

Die DE 101 42 409 A1 offenbart eine Versorgungsleitungsstruktur zur Energieversorgung von elektrischen Komponenten eines Kraftfahrzeugs und zur Übertragung von Informationen zwischen zumindest einem Teil der Komponenten. Um die Störanfälligkeit der Versorgungsleitungsstruktur bei einer Powerline Communication zu verringern und gleichzeitig die Energieversorgung der elektrischen Komponenten weiterhin gewährleisten zu können, wird dort vorgeschlagen, dass die Versorgungsleitungsstruktur gesonderte, von der Fahrzeugkarosserie elektrisch getrennte Versorgungsleitungen als Rückleitungen von den Komponenten zu mindestens einer Energiequelle des Kraftfahrzeugs aufweist. Die Störfestigkeit der Kommunikation soll also durch eine Neugestaltung der Versorgungsleitungsstruktur realisiert werden.

Die EP 3 160 072 A1 offenbart ein Verfahren zur Kommunikation über einen verrauschten Kanal, beispielsweise eine Stromversorgungsleitung in einem Fahrzeug, welches auf asynchroner Datenübertragung mittels eines auf Phasenumtastung basierenden Modulationsverfahrens beruht, welches in der EP 1 292 060 B1 offenbart ist. Die Nachteile des vorgeschlagenen Modulationsverfahrens liegen in dessen Störanfälligkeit gegenüber schmalbandigen Störungen sowie der hohen elektromagnetischen Abstrahlleistung auf der Trägerfrequenz des Signals, wodurch Konflikte mit den gesetzlichen Vorgaben zur elektromagnetischen Verträglichkeit (EMV) auftreten können.

Aus der DE 103 01 637 A1 ist ein Verfahren zur Kommunikation zwischen mindestens zwei Geräten eines Fahrzeugs über eine gemeinsame Stromversorgungsleitung bekannt. Zur Kommunikation wird ein Frequenzspreizverfahren eingesetzt. Zur Durchführung des Verfahrens ist eine Sende-/Empfangseinrichtung (Transceiver) vorgesehen, wobei sowohl die Sendeeinrichtung als auch die Empfangseinrichtung jeweils einen digitalen und einen analogen Abschnitt aufweisen. Vergleichbare Verfahren sind aus der DE 10 2006 059 689 A1 und EP 1 289 164 A1 bekannt.

### OFFENBARUNG DER ERFINDUNG

Es ist daher die Aufgabe der vorliegenden Erfindung, ein Verfahren zur Kommunikation zwischen Geräten eines Fahrzeugs über eine gemeinsame Stromversorgungsleitung vorzuschlagen, welches einen derart schnellen Datenaustausch ermöglicht, dass die aus den etablierten Bus-Systemen, insbesondere LIN oder CAN, bekannte Leistungsfähigkeit reproduziert wird, und welches sich durch eine hohe Robustheit gegen Störsignale sowie eine reduzierte Leistungsabstrahlung auszeichnet.

Zur Lösung der Aufgabe weist die Erfindung die Merkmale des Anspruchs 1 auf.

Die Erfindung schließt die technische Lehre ein, dass zur Kommunikation ein Frequenzspreizverfahren angewendet wird.

Die Erfindung geht dabei von dem Gedanken aus, die zu übertragenden Nutzsignale als schmalbandige Modulationen eines Trägersignals zusätzlich zu modulieren und somit dessen Bandbreite zu vergrößern. Die Sendeleistung wird somit auf ein breites Spektrum aufgeteilt, was zur verminderten Störanfälligkeit gegenüber schmalbandigem Rauschen, zur erhöhten Abhörsicherheit und zu einer geringeren Leistungsabstrahlung pro Frequenzband führt. Das Signal wird als Spannungsmodulation der sonst konstanten Spannungsversorgung der involvierten Geräte übertragen. Mindestens ein Gerät fungiert dabei als Sendeeinheit und mindestens ein Gerät fungiert als Empfänger. Die kommunizierenden Geräte besitzen eine elektrische Verbindung über ihre gemeinsame Stromversorgung. Der Sender schickt das Signal als Spannungsmodulation über die Stromversorgung in einem asynchronen Verfahren, d.h. der Sender sendet eine definierte Abfolge von codierten Bits, die der Empfänger zur Synchronisation mit dem Signal benutzt. Der Empfänger decodiert das Signal und reagiert entsprechend.

Nach der Erfindung wird als Frequenzspreizverfahren ein Direct Sequence Spread Spectrum (DSSS) Verfahren angewendet. Beim DSSS-Verfahren wird das Nutzsignal mittels einer vorgegebenen Bitfolge, dem sogenannten Spreizcode, gespreizt, so dass die Bits des originalen Bitstroms des Nutzsignals in mehrere Subbits, sogenannte Chips, übersetzt werden. Die Bits des Nutzsignals werden somit als Abfolge von DSSS-Signal-Bits übertragen. Der Begriff des Spreizens bezieht sich in diesem Zusammenhang auf das Frequenzspektrum, welches nach der Anwendung des DSSS-Verfahrens von dem zu übertragenden Signal belegt wird. Mittels derselben Verknüpfung wird im Empfänger das Nutzsignal rekonstruiert. Dabei werden auf dem Übertragungsweg hinzugekommene schmalbandige Störsignale im Empfänger gespreizt, so dass die Energiedichte der Störsignale durch diese Spreizung entsprechend verteilt wird und die Störwirkung sinkt.

Ein erfindungsgemäßes Modem ist zur Durchführung des Frequenzspreizverfahrens eingerichtet, wobei die Sende -und der Empfangseinrichtungen größtenteils Software-basiert auf einem Mikroprozessor implementiert sind mit analoger Peripherie zur Signalfilterung und Synchronisation.

Zur Lösung der Aufgabe weist die Erfindung die Merkmale des Anspruchs 2 auf.

Die Erfindung betrifft ferner ein Netzwerk von Geräten eines Fahrzeugs, wobei die Geräte wenigstens eine Steuereinheit und wenigstens ein Lichtmodul einer Beleuchtungseinrichtung umfassen, und wobei die Geräte jeweils mittels eines erfindungsgemäßen Modems über eine gemeinsame Stromversorgungsleitung miteinander verbunden sind, dadurch gekennzeichnet, dass die Geräte mittels einer Ausführungsform des erfindungsgemäßen Kommunikationsverfahrens über die Stromversorgungsleitung miteinander kommunizieren. Ein solches Netzwerk kann insbesondere Bestandteil eines Personenkraftwagens sein, beispielsweise aber auch in Lastkraftwagen, Zug- oder Baumaschinen, Motorrädern sowie Wasserfahrzeugen und Luftfahrzeugen Anwendung finden. In das Netzwerk können weitere Geräte wie Signalleuchten und/oder Kameras und/oder Sensoren eingebunden sein. Beispielsweise fungiert die Steuereinheit innerhalb des Netzwerks als Master und die übrigen Geräte fungieren als Slaves. Bei einer solchen Netzwerkhierarchie hat die Steuereinheit als einzige das Recht, unaufgefordert auf die gemeinsame Stromversorgungsleitung zur Kommunikation zuzugreifen, während die weiteren Geräte erst auf Befehl oder Abfrage durch die Steuereinheit berechtigt sind, Daten über die Stromversorgungsleitung zu übertragen.

Insbesondere sind die Geräte des erfindungsgemäßen Netzwerks ausschließlich mittels der gemeinsamen Stromversorgungsleitung miteinander verbunden. Durch den Wegfall zusätzlicher Signalleitungen verringert sich der vorzuhaltende Bauraum für das Netzwerk, und die Montage wird signifikant erleichtert, so dass es einfacher möglich ist, eine große Vielzahl an unterschiedlichen Geräten in das Netzwerk zu integrieren.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung des erfindungsgemäßen Kommunikationsverfahrens,
- Fig. 2a-d: Funktionsgraphen von Signalverläufen,
- Fig. 3: eine schematische Darstellung eines erfindungsgemäßen Modems, und
- Fig. 4: eine schematische Darstellung eines erfindungsgemäßen Netzwerks.

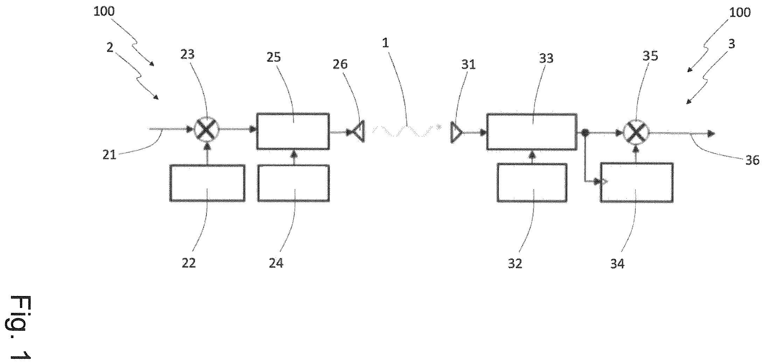

Fig. 1 zeigt eine schematische Darstellung des erfindungsgemäßen Kommunikationsverfahrens anhand der in einer Sendeeinrichtung 2 und einer Empfangseinrichtung 3 eines erfindungsgemäßen Modems 100 ablaufenden Verfahrensschritte.

In der Sendeeinrichtung 2 wird nach dem Eingang 21 eines zu übermittelnden digitalen Nutzsignals und der Erzeugung 22 des Spreizcodes eine Codierung 23 des Nutzsignals mit dem Spreizcode durchgeführt, das daraus resultierende digitale Signal wird als DSSS-Signal bezeichnet. Die Erzeugung 24 eines hochfrequenten Trägersignals erfolgt beispielsweise mittels eines Quarzoszillators. Das Trägersignal erfährt dann eine Modulation 25 mit dem DSSS-Signal, vorzugsweise mittels Phasen- oder Frequenzmodulation. Anschließend wird eine Einkopplung 26 des modulierten Trägersignals, welches als Bussignal bezeichnet wird, in die die Modems 100 verbindende Stromversorgungsleitung 1 vorgenommen, und als Spannungsmodulation der sonst konstanten Spannungsversorgung der involvierten Geräte zur Empfangseinrichtung 3 am Modem 100 des Adressaten transportiert.

In der Empfangseinrichtung 3 erfolgt eine Signalauskopplung 31 des Bussignals aus der Stromversorgungsleitung 1 und eine Demodulation 33 mittels des im Schritt 32 erzeugten reinen Trägersignals in das Basisband des DSSS-Signals. Mittels erneuter Multiplikation des DSSS-Signals mit dem in Schritt 34 erzeugten Spreizcode erfolgt das Decodieren 35 des übertragenen Nutzsignals, welches dann durch die Signalausgabe 36 an das adressierte Gerät weitergeleitet wird.

Das verwendete Frequenzspreizverfahren reduziert durch die möglichst gleichmäßige Aufteilung des Signals auf ein großes Frequenzband die Empfindlichkeit der Übertragung gegenüber schmalbandigen Störungen z.B. durch andere Geräte am Fahrzeug. Die spektrale Leistungsdichte des übertragenen Signals ist durch die Frequenzspreizung minimiert, wodurch die elektromagnetische Verträglichkeit des erfindungsgemäßen Kommunikationsverfahrens verbessert wird. Zudem kann das Verfahren auf relativ leistungsschwachen, handelsüblichen Mikrocontrollern implementiert werden. Insbesondere können sämtliche Verfahrensschritte der digitalen Signalbearbeitung, d.h. die Erzeugung 22, 32 des Spreizcodes, die De-/Codierung 35, 23 der Signale sowie die De-/Modulation 33, 25 des Trägersignals, auf einem geeigneten Mikrocontroller Software-basiert durchgeführt werden.

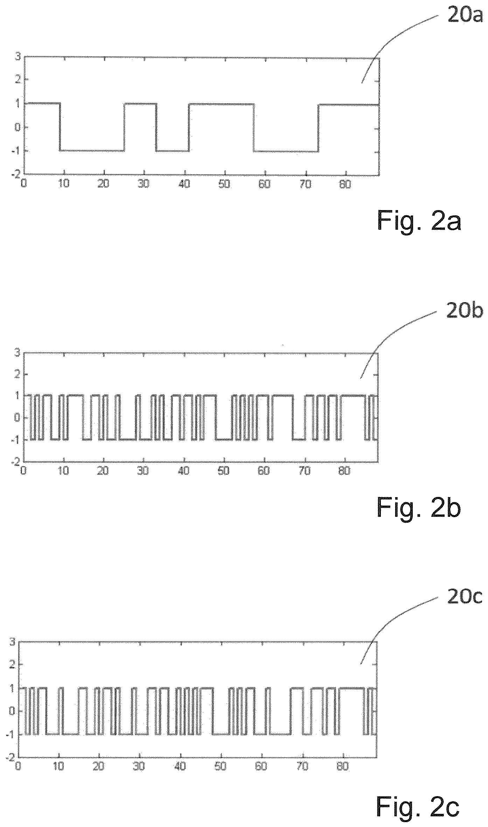

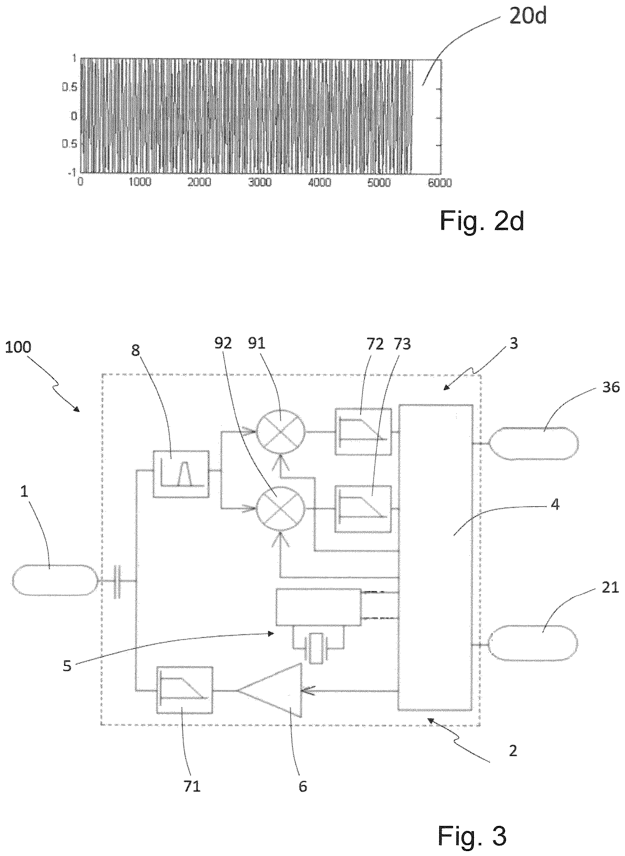

Die Fig. 2a-d zeigen Funktionsgraphen als beispielhafte Zeitverläufe eines typischen digitalen Nutzsignals 20a, eines Spreizcodes 20b, des codierten DSSS-Signals 20c sowie des resultierenden Bussignals 20d. Das Nutzsignal 20a repräsentiert den Binärcode "1 0 0 1 0 1 1 0 0 1 1", welcher beispielsweise einem Abschnitt eines LIN Steuerbefehls entspricht. Der Spreizcode 20b stellt eine korrelationsarme Bitsequenz, hier einen Barker-7 Code, dar. Die Länge eines Bits des Nutzsignals 20a entspricht dabei sieben Chips des Spreizcodes 20b. Aus der Multiplikation des Nutzsignals 20a mit dem Spreizcode 20b resultiert das DSSS-Signal 20c. Es wird also jedes Bit des Nutzsignals 20a auf sieben Bits des DSSS-Signals 20c gespreizt. Die Kommunikation zwischen den verbundenen Geräten kann somit mit kurzer Latenzzeit erfolgen, insbesondere kann die für das LIN Protokoll typische Latenzzeit von etwa 1 ms erreicht werden. Das DSSS-Signal 20c weist wie der Spreizcode 20b eine bei Verschiebung minimale Autokorrelation auf. Die entsprechende Modulation des Trägersignals sieht für unberechtigte Dritte, welche das Bussignal 20d abhören, daher wie weißes Rauschen aus, so dass die Signalübertragung für Dritte fast nicht als solche wahrnehmbar ist. Das verwendete Trägersignal ist vorzugsweise eine Sinusschwingung mit einer Frequenz aus dem Bereich von 8 MHz bis 13 MHz. Zur Bildung des Bussignals 20d, welches die über die Stromversorgungsleitung transportierte Spannungsmodulation darstellt, wird das Trägersignal mit dem DSSS-Signal moduliert, wobei hierzu prinzipiell ein beliebiges Modulationsverfahren verwendet werden kann, insbesondere ein Phasen- oder Frequenzmodulationsverfahren.

Fig. 3 zeigt eine schematische Darstellung eines erfindungsgemäßen Modems 100 zur Durchführung des erfindungsgemäßen Kommunikationsverfahrens über eine Stromversorgungsleitung 1. Die wesentlichen Bestandteile des Modems 100 sind der Mikrocontroller 4, der Quarzoszillator 5 sowie die analoge Peripherie zur Filterung und Synchronisation.

Der Mikrocontroller 4, beispielsweise vom Typ RL78/F13 von Renesas Electronics Corp., ist über serielle Datenschnittstellen (UART) als Signaleingang 21 bzw. Signalausgabe 36 mit einem zugehörigen Gerät des Kommunikationsnetzwerks verbunden. Auf dem Mikrocontroller 4 wird die digitale Signalverarbeitung, d.h. das Codieren und Decodieren des Nutzsignals mittels des Spreizcodes, sowie die Signalmodulation mittels des von dem Quarzoszillator 5 bereitgestellten Trägersignals durchgeführt. Der Mikrocontroller 4 ist somit sowohl Bestandteil der Sendeeinrichtung 2, als auch der Empfangseinrichtung 3.

Die Sendeeinrichtung 2 umfasst zudem den Signalverstärker 6, in welchem das mit dem DSSS-Signal modulierte Trägersignal verstärkt wird, sowie den Tiefpassfilter 71 zur Rauschunterdrückung und Eliminierung von elektromagnetisch unverträglichen Hochfrequenzen. Das resultierende Bussignal wird ausgangsseitig der Sendeeinrichtung 2 in die Stromversorgungsleitung 1 eingekoppelt, an welche das Modem 100 kapazitiv gekoppelt ist.

Die Empfangseinrichtung 3 weist einen eingangsseitigen Bandpassfilter 8 auf, welcher die von der Stromversorgungsleitung 1 empfangenen Signale auf den für die Kommunikation genutzten Frequenzbereich um die Trägerfrequenz einschränkt. Das resultierende Signal wird auf die beiden Mischer 91, 92 aufgeteilt und dort komponentenweise demoduliert. Durch die Tiefpassfilter 72, 73 wird das demodulierte Signal auf das Basisband des DSSS-Signals reduziert und dem Mikrocontroller 4 zur Decodierung übertragen.

Mit dem erfindungsgemäßen Modem 100 kann eine ausreichend schnelle Datenverarbeitung realisiert werden, um LIN Spezifikationen zu erfüllen. Zur Erfüllung der anspruchsvolleren CAN Spezifikationen müsste das Modem 100 insbesondere mit einem leistungsfähigeren Mikrocontroller als dem beispielhaft angeführten Typ RL78/F13 von Renesas Electronics Corp. ausgestattet werden. Zur Synchronisation ist bei dem verwendeten Frequenzspreizverfahren eine Genauigkeit der Signalabtastung von ca. 1 µs notwendig. Daher muss insbesondere der eingesetzte Quarzoszillator 5 eine entsprechend hohe Güte aufweisen.

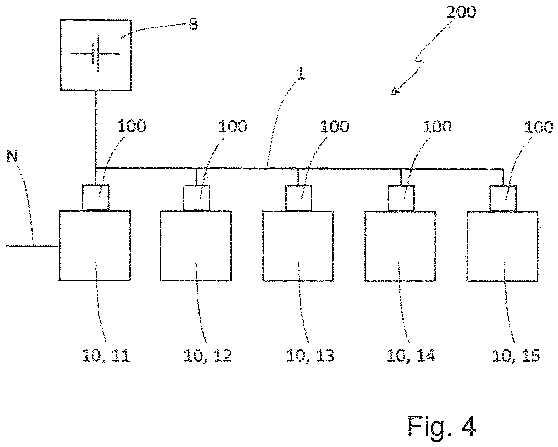

Fig. 4 zeigt eine schematische Darstellung eines erfindungsgemäßen Netzwerks 200 in einem Fahrzeug umfassend eine Mehrzahl an Geräten 10, welche über serielle Schnittstellen jeweils an ein erfindungsgemäßes Modem 100 angeschlossen und über eine gemeinsame Stromversorgungsleitung 1 miteinander verbunden sind. Zum Betrieb der Geräte 10 dient die Batterie B, beispielsweise die Starterbatterie eines Kraftfahrzeugs, welche die Geräte 10 mit einer Gleichspannung versorgt. Die Modems 100 sind kapazitiv an die Stromversorgungsleitung 1 gekoppelt und übertragen die Bussignale im Netzwerk 200 als hochfrequente Spannungsmodulationen auf der Versorgungsgleichspannung.

Im hier dargestellten Netzwerk 200 bestehen die Geräte 10 aus einer Steuereinheit 11, einem Lichtmodul 12, einer Signalleuchte 13. einer Kamera 14 sowie einem Sensor 15. insbesondere fungiert die Steuereinheit 11 als Master und die übrigen Geräte 12, 13, 14, 15 als Slaves.

Beispielsweise kann das erfindungsgemäße Netzwerk auch ein Subnetz eines Fahrzeugbordnetzes, etwa eines LIN- oder CAN-Busses, darstellen. Dazu ist in der hier dargestellten Ausführungsform die Steuereinheit 11 über die Netzwerkverbindung N an das weitere Bordnetz angeschlossen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 100: Modem
- 200: Netzwerk
- 1: Stromversorgungsleitung
- 10: Gerät
- 11: Steuereinheit
- 12: Lichtmodul
- 13: Signalleuchte
- 14: Kamera
- 15: Sensor
- 2: Sendeeinrichtung
- 20a: Nutzsignal
- 20b: Spreizcode
- 20c: DSSS-Signal
- 20d: Bussignal
- 21: Eingang des Nutzsignals
- 22: Erzeugung des Spreizcodes
- 23: Codierung des Nutzsignals
- 24: Erzeugung des Trägersignals
- 25: Modulation des Trägersignals
- 26: Signaleinkopplung
- 3: Empfangseinrichtung
- 31: Signalauskopplung
- 32: Erzeugung des Trägersignals
- 33: Demodulation
- 34: Erzeugung des Spreizcodes
- 35: Decodierung
- 36: Signalausgabe
- 4: Mikrocontroller
- 5: Quarzoszillator
- 6: Verstärker
- 71,72,73: Tiefpassfilter
- 8: Bandpassfilter
- 91, 92: Mischer
- B: Batterie
- N: Netzwerkverbindung

## Patentansprüche

1. Modem (100) zur Kommunikation über eine Stromversorgungsleitung (1) zwischen mindestens zwei Geräten (10) eines Fahrzeugs, wobei das Modem (100) wenigstens die folgenden Einrichtungen umfasst:
- eine Sendeeinrichtung (2), welche dazu ausgebildet ist, ein digitales Nutzsignal (20a) mit einem Spreizcode (20b) zu codieren und als ein DSSS-Signal (20c) auf ein sinusförmiges Trägersignal aufzumodulieren und ein daraus resultierendes Bussignal (20d) als eine Spannungsmodulation auf die Stromversorgungsleitung (1) zu übertragen, und
- eine Empfangseinrichtung (3), welche dazu ausgebildet ist, das Bussignal (20d) von der Stromversorgungsleitung (1) zu empfangen und das Bussignal (20d) in das Basisband des DSSS-Signals (20c) zu demodulieren und aus dem DSSS-Signal (20c) das Nutzsignal (20a) mittels des Spreizcodes (20b) zu decodieren,
**dadurch gekennzeichnet, dass** ein resultierendes Bussignal ausgangsseitig der Sendeeinrichtung (2) in die Stromversorgungsleitung (1) eingekoppelt wird, an welche das Modem (100) kapazitiv gekoppelt ist, dass ein Mikrocontroller (4), ein Quarzoszillator (5) sowie eine analoge Peripherie zur Filterung und Synchronisation vorgesehen ist, wobei die Sendeeinrichtung (2) und die Empfangseinrichtung (3) größtenteils softwarebasiert in dem Mikrocontroller (4) implementiert sind und wobei als analoge Peripherie die Sendeeinrichtung einen Signalverstärker (6) aufweist, in welchem das mit dem DSSS-Signal modulierte Trägersignal verstärkt wird, sowie einen Tiefpassfilter (71) zur Rauschunterdrückung und Eliminierung von elektromagnetisch unverträglichen Hochfrequenzen und wobei als analoge Peripherie die Empfangseinrichtung (3) einen eingangsseitigen Bandpassfilter (8) aufweist, welcher die von der Stromversorgungsleitung (1) empfangene Signale auf den für die Kommunikation genutzten Frequenzbereich und die Trägerfrequenz einschränkt sowie Mischer (91, 92) aufweist, auf die das in den Bandpassfilter (8) resultierende Signal aufgeteilt und durch die es komponentenweise demoduliert wird, und Tiefpassfilter (72, 73), mittels derer das demodulierte Signal auf das Basisband des DSSS-Signals reduziert und an den Mikrocontroller (4) zur Decodierung übertragen wird.

2. Netzwerk (200) von Geräten (10) eines Fahrzeugs, wobei die Geräte (10) wenigstens eine Steuereinheit (11) und wenigstens ein Lichtmodul (12) einer Beleuchtungseinrichtung umfassen, und wobei die Geräte (10) jeweils mittels eines Modems (100) gemäß Anspruch 1 über eine gemeinsame Stromversorgungsleitung (1) miteinander verbunden sind, wobei die Geräte (10) mittels eines Direct Sequence Spread Spectrums (DSSS) als Frequenzspreizverfahren über die Stromversorgungsleitung (1) miteinander kommunizieren.

3. Netzwerk (200) nach Anspruch 2, **dadurch gekennzeichnet, dass** die Geräte (10) weiterhin Signalleuchten (13) und/oder Kameras (14) und/oder Sensoren (15) umfassen.

4. Netzwerk (200) nach Anspruch 2 oder 3, **dadurch gekennzeichnet, dass** die Steuereinheit (11) als Master fungiert und die übrigen Geräte (12, 13, 14, 15) als Slaves fungieren.

5. Netzwerk (200) nach einem der Ansprüche 2 bis 4, **dadurch gekennzeichnet, dass** die Geräte (10) ausschließlich mittels der gemeinsamen Stromversorgungsleitung (1) miteinander verbunden sind.

## Claims

1. A modem (100) for communication over a power supply line (1) between at least two devices (10) of a vehicle, wherein the modem (100) comprises at least the following means:
- a transmitting means (2), which is configured to encode a digital wanted signal (20a) with a spreading code (20b) and modulate it as a DSSS signal (20c) onto a sinusoidal carrier signal and transmit a resultant bus signal (20d) to the power supply line (1) as voltage modulation, and
- a receiving means (3), which is configured to receive the bus signal (20d) from the power supply line (1) and demodulate the bus signal (20d) into the baseband of the DSSS signal (20c) and decode the wanted signal (20a) from the DSSS signal (20c) using the spreading code (20b), **characterized in that** a resultant bus signal is injected into the power supply line (1) on the output side of the transmitting means (2), wherein the modem (100) is being capacitively coupled to said power supply line (1), that a microcontroller (4), a quartz oscillator (5) and analog peripherals for filtering and synchronization are provided, wherein the transmitting means (2) and the receiving means (3) are for the most part implemented in software-based manner on a microprocessor (4), wherein as an analog peripheral the transmitting means (2) comprise a signal amplifier (6), in which the carrier signal modulated with the DSSS signal is amplified, and further a low-pass filter (71) for noise suppression and elimination of electromagnetically incompatible high-frequencies, and wherein as an analog peripheral the receiving means (3) has a bandpass filter (8) on the input side, which bandpass filter (8) limits the signals received by the power supply line (1) to the frequency range, used for communication, around the carrier frequency, and further mixers (91, 92), into which the resultant signal of the bandpass filter (8) is divided and demodulated there component-wise, and low-pass filters (72, 73), which reduce the demodulated signal to the baseband of the DSSS signal and transmit it to the microcontroller (4) for decoding.

2. A network (200) of devices (10) of a vehicle, wherein the devices (10) comprise at least one control unit (11) and at least one light module (12) of a lighting means, and wherein the devices (10) are each connected together by means of a modem (100) according to Claim 1 via a common power supply line (1), wherein the devices (10) communicate with one another over the power supply line (1) using a direct sequence spread spectrum (DSSS) method as the spread spectrum method.

3. The network (200) according to Claim 2, **characterized in that** the devices (10) further comprise signal lights (13) and/or cameras (14) and/or sensors (15).

4. The network (200) according to Claim 2 or 3, **characterized in that** the control unit (11) functions as master and the other devices (12, 13, 14, 15) function as slaves.

5. The network (200) according to any one of Claims 2 to 4, **characterized in that** the devices (10) are connected to one another solely by means of the common power supply line (1).

## Revendications

1. Modem (100) pour la communication via une ligne d'alimentation électrique (1) entre au moins deux appareils (10) d'un véhicule, le modem (100) comprenant au moins les dispositifs suivants :
- un dispositif d'émission (2), qui est configuré pour coder un signal utile numérique (20a) avec un code d'étalement (20b) et pour le moduler sous la forme d'un signal DSSS (20c) sur un signal porteur sinusoïdal et pour transmettre un signal de bus (20d) résultant sous la forme d'une modulation de tension sur la ligne d'alimentation électrique (1), et
- un dispositif de réception (3), qui est configuré pour recevoir le signal de bus (20d) de la ligne d'alimentation électrique (1) et pour démoduler le signal de bus (20d) dans la bande de base du signal DSSS (20c) et pour décoder le signal utile (20a) à partir du signal DSSS (20c) au moyen du code d'étalement (20b),
**caractérisé en ce qu'**un signal de bus résultant est couplé côté sortie du dispositif d'émission (2) dans la ligne d'alimentation électrique (1), auquel le modem (100) est couplé de manière capacitive, **en ce qu'**il est prévu un microcontrôleur (4), un oscillateur à quartz (5) ainsi qu'une périphérie analogique pour le filtrage et la synchronisation, le dispositif d'émission (2) et le dispositif de réception (3) étant implémentés en grande partie par logiciel dans le microcontrôleur (4) et le dispositif d'émission présentant en tant que périphérie analogique un amplificateur de signal (6) dans lequel le signal porteur modulé avec le signal DSSS est amplifié, ainsi qu'un filtre passe-bas (71) pour la réduction du bruit et l'élimination des hautes fréquences électromagnétiquement incompatibles et, en tant que périphérique analogique, le dispositif de réception (3) présentant un filtre passe-bande (8) côté entrée, qui limite les signaux reçus par la ligne d'alimentation électrique (1) à la plage de fréquences utilisée pour la communication et à la fréquence porteuse, ainsi que des mélangeurs (91, 92) sur lesquels le signal résultant dans le filtre passe-bande (8) est réparti et par lesquels il est démodulé composante par composante, et des filtres passe-bas (72, 73) au moyen desquels le signal démodulé est réduit à la bande de base du signal DSSS et transmis au microcontrôleur (4) pour décodage.

2. Réseau (200) d'appareils (10) d'un véhicule, les appareils (10) comprenant au moins une unité de commande (11) et au moins un module d'éclairage (12) d'un dispositif d'éclairage, et les appareils (10) étant reliés entre eux respectivement au moyen d'un modem (100) selon la revendication 1 via une ligne d'alimentation électrique commune (1), les appareils (10) communiquant entre eux au moyen d'un étalement du spectre à séquence directe (DSSS) en tant que procédé d'étalement de fréquence via la ligne d'alimentation électrique (1).

3. Réseau (200) selon la revendication 2, **caractérisé en ce que** les appareils (10) comprennent en outre des lampes de signalisation (13) et/ou des caméras (14) et/ou des capteurs (15).

4. Réseau (200) selon la revendication 2 ou 3, **caractérisé en ce que** l'unité de commande (11) agit en tant que maître et les autres dispositifs (12, 13, 14, 15) agissent en tant qu'esclaves.

5. Réseau (200) selon l'une quelconque des revendications 2 à 4, **caractérisé en ce que** les appareils (10) sont reliés entre eux exclusivement au moyen de la ligne d'alimentation électrique commune (1).
